Europäisches Patentamt

European Patent Office

Office européen des brevets

(19)

(11) Numéro de publication : **0 313 447 B1**

(12) **FASCICULE DE BREVET EUROPEEN**

(45) Date de publication du fascicule du brevet :
**29.04.92 Bulletin 92/18**

(51) Int. Cl.⁵ : **C08F 2/06,** C08F 220/18,
C23C 2/26, C09D 5/08

(21) Numéro de dépôt : **88402607.1**

(22) Date de dépôt : **14.10.88**

(54) **Composition pour la protection superficielle du zinc contre la "rouille blanche" et procédés correspondants.**

(30) Priorité : **22.10.87 FR 8714615**
**20.07.88 FR 8809818**

(43) Date de publication de la demande :
**26.04.89 Bulletin 89/17**

(45) Mention de la délivrance du brevet :
**29.04.92 Bulletin 92/18**

(84) Etats contractants désignés :
**AT BE CH DE ES GB GR IT LI LU NL SE**

(56) Documents cités :
**EP-A- 0 162 611**
**BE-A- 676 769**
**GB-A- 2 033 400**
**US-A- 4 237 192**

(73) Titulaire : **PRODUITS CHIMIQUES
AUXILIAIRES ET DE SYNTHESE (P.C.A.S.)
Société anonyme dite:
Z.I. de la Vigne aux Loups 23, rue Bossuet B P
III
F-91160 Longjumeau (FR)**

(72) Inventeur : **Kerherve, Jean-Pierre
28 Bis, Chemin des Fonceaux
Linas F-91310 Montlhéry (FR)**

(74) Mandataire : **Faber, Jean-Paul
CABINET FABER 35, rue de Berne
F-75008 Paris (FR)**

EP 0 313 447 B1

Jouve, 18, rue Saint-Denis, 75001 PARIS

## Description

La présente invention concerne un procédé d'obtention d'une préparation prête à l'emploi pour la protection superficielle du zinc contre la "rouille blanche", qu'il s'agisse d'articles en zinc massif ou d'articles revêtus de zinc. L'invention vise également ladite préparation ainsi qu'un procédé de protection, éventuellement temporaire, du zinc contre la rouille blanche.

Comme on le sait, le zinc est un métal très utilisé, notamment pour la protection des aciers contre la corrosion (galvanisation).

En atmosphère de faible humidité relative, le zinc se transforme superficiellement en carbonate de zinc (la "patine") qui le rend peu sensible à toute corrosion atmosphérique ultérieure. Cependant, en atmosphère humide, acide ou tiède (cas très fréquent de stockages en régions industrielles ou tropicales), la formation de carbonate de zinc est localement remplacée par celle d'hydroxyde de zinc hydraté, communément appelé "rouille blanche", modifiant l'aspect de surface des pièces galvanisées et les rendant corrodables.

On s'est donc efforcé de protéger superficiellement le zinc pour éviter la formation de cette rouille blanche.

La technique antérieure la plus efficace est l'utilisation d'une solution de bichromate de sodium $Na_2Cr_2O_7$, qui assure une protection jugée convenable mais dont l'utilisation présente des risques du fait de la toxicité du $Na_2Cr_2O_7$

D'autres techniques permettent d'obtenir d'assez bons résultats, en ce qui concerne la protection, mais certains inconvénients (films huileux ou gras, inflammabilité ...) en limitent l'utilisation.

L'invention a pour but de remédier à ces inconvénients, en ayant recours à une préparation à base de polymères acryliques et/ou méthacryliques.

Il a certes déjà été proposé, par BE-A-676 766, une préparation protectrice issue d'un procédé qui consiste à polymériser, en milieu solvant organique, au moins un acide (méth)acrylique et au moins un (méth)acrylate, et à former à partir du copolymère résultant en solution organique une préparation prête à l'emploi par dilution dans une quantité d'eau telle que l'eau soit en quantité prédominante par rapport au(x) solvant(s) de l'étape de polymérisation, mais une telle préparation, qui est à base d'esters alkyliques en $C_1$-$C_8$ d'acide acrylique et qui renferme obligatoirement des éthers méthylolés, ne peut être appliquée qu'à des températures relativement basses par rapport aux températures auxquelles se trouvent les articles à traiter au sortir des bains de galvanisation.

On a maintenant découvert qu'en utilisant au moins un (méth)acrylate d'alkyle à longue chaîne, c'est-à-dire en $C_{12}$-$C_{22}$, pour la polymérisation, et donc en augmentant la masse molaire de l'un au moins des motifs constitutifs du copolymère, on aboutit à des compositions qui permettent de traiter des pièces chaudes, à la sortie même des bains de galvanisation, c'est-à-dire à environ 250°C. Au surplus, on constate que la durée utile des bains de traitement est accrue et que l'adhérence et la souplesse du film déposé sont améliorées.

Le système à prédominance aqueuse ainsi obtenu permet d'obtenir un film de protection sec, adhérent, non toxique, éventuellement éliminable, utilisable sur des pièces chaudes ou froides, et ce, à partir d'une solution homogène, ininflammable, facilement utilisable (par trempé, pulvérisation.

Dans la présente description et les revendications, on entend par (méth)acrylate aussi bien un acrylate qu'un méthacrylate et par acide (méth)acrylique aussi bien l'acide acrylique que l'acide méthacrylique.

Par copolymère, on entend copolymère au sens large, c'est-à-dire un polymère comportant des motifs monomères d'au moins deux types. Le copolymère comportera, de préférence, des motifs de deux types, ou encore de trois types, auquel cas il s'agira d'un terpolymère.

Dans une forme d'exécution tout particulièrement préférée, la préparation selon l'invention est à base d'un terpolymère qui renferme des motifs (méth)acrylate de lauryle, c'est-à-dire comportant un terme alkyle ayant 12 atomes de carbone.

Dans la suite, on désignera le copolymère de (méth)acrylate par l'expression "le composant actif".

Le composant actif a un indice d'acide allant de 50 à 150 mg KOH pour 1 g de composant, et de préférence de 90 à 120 mg de KOH pour 1 g.

Par ailleurs, le composant actif a, de préférence, une masse moléculaire moyenne en nombre Mn comprise entre 2000 et 20000 et, de préférence, entre 3000 et 5000.

L'eau ajoutée pour la formation de la préparation prête à l'emploi, est apportée par une solution aqueuse aminée, par exemple une solution ammoniacale ou une solution à base de morpholine.

La teneur de la solution en composant actif est fonction de la protection désirée et du mode d'application utilisé mais, en général, elle 'sera comprise entre 1 à 50 g de solides pour 100 g de préparation.

En général, la couche de protection déposée sur le zinc à traiter est prévue pour y rester à demeure. On peut cependant envisager des cas où l'on ne cherche à obtenir qu'une protection temporaire et où le zinc doit être débarrassé de sa protection superficielle pour, par exemple, être recouvert d'une peinture qui n'accrocherait pas sur la couche de protection.

2

Dans un tel cas, il est possible d'éliminer la couche de protection par réaction avec une lessive faiblement alcaline.

La préparation de base est incolore et transparente. Il est cependant possible d'y ajouter des ingrédients appropriés pour la rendre opaque et/ou colorée.

L'invention sera mieux comprise à la lecture des exemples ci-après.

EXEMPLE 1

Composition à base de terpolymère

**a) Synthèse du polymère**

On dispose d'un tricol équipé d'une agitation, d'un thermomètre, d'une ampoule de coulée, d'une introduction d'azote et d'un réfrigérant.

Dans le tricol, on introduit, comme milieu solvant, 634,5 g d'éther butylique du monoéthylène glycol.

Sous agitation, on porte le solvant à 80°C.

Dans l'ampoule de coulée, on introduit le mélange homogène suivant :

| | |
|---|---|
| acide méthacryiique | 53,3 g |
| méthacrylate de butyle | 269 g |
| méthacrylate de lauryle | 15,2 g |
| dodécane thiol | 24,9 g |
| azo bis isobutyronitrile | 3,1 g |

les deux derniers composants servant, d'une manière connue en soi, d'initiateur et d'agent de transfert.

Ce mélange est lentement introduit dans le tricol (durée de l'introduction 40 à 60 mn) en maintenant la température du milieu réactionnel à 83°C. Après la fin de la coulée, on maintient le milieu réactionnel à 83°C durant 2,30 heures supplémentaires.

La solution obtenue contient 36 % de polymère dont l'indice d'acide est environ de 95 mg de KOH pour 1 g. La masse molaire moyenne en nombre Mn est de 4000 environ.

**b) Solution prête à l'emploi**

On introduit sous agitation, dans un tricol, 197 g de la solution issue de l'étape précédente, 803 g d'eau permutée et environ 30 g de morpholine.

On obtient une solution homogène dont le pH est de 9,3, l'extrait sec de 7 % et la viscosité en coupe consistométrique AFNOR N° 2,5 de 35 secondes environ.

**c) Application**

L'application est faite dans les mêmes conditions que celles indiquées dans l'exemple 1, étant toutefois entendu qu'il est possible d'appliquer la composition résultante sur des pièces à protéger à la sortie même du bain de galvanisation, c'est-à-dire à une température relativement élevée.

EXEMPLE 2

Protection temporaire et élimination du film

Une pièce de zinc est revêtue de polymère selon l'invention. Après une période de stockage, on élimine le film au moyen d'une solution de détergent alcalin de composition suivante :

| | |
|---|---|
| sel tétrasodique de l'EDTA | 0,2 |
| nonyl phénol polyoxyéthylène (10 OE) | 0,5 |
| triéthanolamine | 2 |
| ether de glycol | 1 |
| eau | qsq 100 g |

3

EXEMPLE 3

Préparation d'un film coloré

On obtient un film coloré en introduisant dans la solution selon l'invention, 1 % de colorant bleu Irganol.

EXEMPLE 4

Préparation d'un film opaque

On obtient un film opaque en introduisant dans la solution selon l'invention, 5 % d'oxyde de titane préalablement broyé dans la solution concentrée de polymère.

**Revendications**

1. Procédé d'obtention d'une préparation à base de polymères acryliques et/ou méthacryliques, destinée au traitement superficiel du zinc, qui consiste à polymériser, en milieu solvant organique, au moins un acide (méth)acrylique et au moins un (méth)acrylate, et à former à partir du copolymère résultant en solution organique une préparation prête à l'emploi par dilution dans une quantité d'eau telle que l'eau soit en quantité prédominante par rapport au(x) solvant(s) de l'étape de polymérisation, caractérisé en ce qu'il consiste à utiliser comme (méth)acrylate de départ au moins un (méth)acrylate d'alkyle en $C_{12}$-$C_{22}$.

2. Procédé selon la revendication 1, caractérisé en ce que l'étape de polymérisation débouche sur un copolymère comportant des motifs monomères de deux types différents.

3. Procédé selon la revendication 1, caractérisé en ce que l'étape de polymérisation débouche sur un terpolymère.

4. Procédé selon la revendication 3, caractérisé en ce que le terpolymère comporte des motifs (méth)acrylate de lauryle.

5. Procédé selon l'une quelconque des revendications 1 à 4, caractérisé en ce que l'eau ajoutée pour la formation de la préparation prête à l'emploi est apportée par une solution aqueuse aminée.

6. Procédé selon la revendication 5, caractérisé en ce que la solution aqueuse aminée est une solution ammoniacale ou une solution à base de morpholine.

7. Procédé selon l'une quelconque des revendications 4 à 6, caractérisé en ce que l'étape de polymérisation débouche sur un terpolymère de (méth)acrylate de butyle, de (méth)acrylate de lauryle et d'acide (méth)acrylique.

8. Procédé selon l'une quelconque des revendications 1 à 7, caractérisé en ce qu'il débouche sur une préparation renfermant de 1 à 50 g de solides pour 100 g.

9. Procédé selon l'une quelconque des revendications 1 à 8, caractérisé en ce que l'étape de polymérisation débouche sur un copolymère ayant un indice d'acide de 50 à 150 mg KOH pour 1 g.

10. Procédé selon la revendication 9, caractérisé en ce que l'étape de polymérisation débouche sur un copolymère ayant un indice d'acide de 90 à 120 mg KOH pour 1 g.

11. Procédé selon l'une quelconque des revendications 1 à 10, caractérisé en ce que l'étape de polymérisation débouche sur un copolymère ayant une masse moléculaire moyenne en nombre $\overline{Mn}$ comprise entre 2000 et 20000.

12. Procédé selon la revendication 11, caractérisée en ce que l'étape de polymérisation débouche sur un copolymère ayant une masse moléculaire moyenne en nombre $\overline{Mn}$ comprise entre 3000 et 5000.

13. Préparation prête à l'emploi pour la protection superficielle du zinc contre la "rouille blanche" issue du procédé selon l'une quelconque des revendications 1 à 12.

14. Procédé de protection superficielle du zinc contre la rouille blanche, caractérisé en ce qu'il consiste à appliquer sur le zinc la préparation selon la revendication 13 sur une épaisseur comprise entre 2 et 20 μm.

15. Procédé de protection superficielle temporaire du zinc contre la rouille blanche, caractérisé en ce qu'il consiste à appliquer sur le zinc la préparation selon la revendication 13 sur une épaisseur comprise entre 2 et 20 μm et, au moment voulu, à éliminer ledit film par réaction avec une lessive faiblement alcaline.

16. Procédé de protection superficielle du zinc selon la revendication 14 ou 15, caractérisé en ce qu'il consiste à appliquer sur le zinc, à une température de l'ordre de 250°C, la préparation issue du procédé selon l'une quelconque des revendication 1 à 12.

**Patentansprüche**

1. Verfahren zur Herstellung eines Mittels zur Oberflächenbehandlung von Zink auf der Basis von Acryl- und/oder Methacrylpolymeren, bei dem mindestens eine (Meth)Acrylsäure und mindestens ein (Meth)Acrylat in organischem Lösungsmittel polymerisiert werden und bei dem, ausgehend von einem Copolymer, das in organischer Lösung anfällt, ein gebrauchsfertiges Mittel durch Verdünnung in einem Überschuß an Wasser relativ zu dem (den) während des Polymerisationsschrittes eingesetzten Lösungsmittel(n) hergestellt wird, dadurch gekennzeichnet, daß als Ausgangs(meth)acrylat mindestens ein (Meth)acrylsäurealkylester mit $C_{12}$ bis $C_{22}$ eingesetzt wird.

2. Verfahren nach Anspruch 1, dadurch gekennzeichnet, daß der Polymerisationsschritt zu einem Copolymer mit zwei unterschiedlichen Arten von Monomerengruppen führt.

3. Verfahren nach Anspruch 1, dadurch gekennzeichnet, daß der Polymerisationsschritt zu einem Terpolymer führt.

4. Verfahren nach Anspruch 3, dadurch gekennzeichnet, daß das Terpolymer (Meth)acrylsäurelaurylestergruppen enthält.

5. Verfahren nach einem der Ansprüche 1 bis 4, dadurch gekennzeichnet, daß das zur Herstellung des gebrauchsfertigen Mittels hinzugefügte Wasser mit einer wässrigen aminhaltigen Lösung versetzt wird.

6. Verfahren nach Anspruch 5, dadurch gekennzeichnet, daß die wässrige aminhaltige Lösung eine ammoniakalische Lösung oder eine morpholinhaltige Lösung ist.

7. Verfahren nach einem der Ansprüche 4 bis 6, dadurch gekennzeichnet, daß bei der Polymerisation ein Terpolymer aus (Meth)acrylsäurebutylester, (Meth)acrylsäurelaurylester und (Meth)acrylsäure entsteht.

8. Verfahren nach einem der Ansprüche 1 bis 7, dadurch gekennzeichnet, daß es zu einem Mittel führt, das 1 bis 50 g Feststoffe pro 100 g enthält.

9. Verfahren nach einem der Ansprüche 1 bis 8, dadurch gekennzeichnet, daß der Polymerisationsschritt zu einem Copolymer mit einem Säurewert von 50 bis 150 mg KOH pro 1 g führt.

10. Verfahren nach Anspruch 9, dadurch gekennzeichnet, daß der Polymerisationsschritt zu einem Copolymer mit einem Säurewert von 90 bis 120 mg KOH pro 1 g führt.

11. Verfahren nach einem der Ansprüche 1 bis 10, dadurch gekennzeichnet, daß der Polymerisationsschritt zu einem Copolymer mit einem durchschnittlichen Molekulargewicht in $\overline{Mn}$-Zahlen zwischen 2000 und 20 000 führt.

12. Verfahren nach Anspruch 11, dadurch gekennzeichnet, daß der Polymerisationsschritt zu einem Copolymer mit einem durchschnittlichen Molekulargewicht in $\overline{Mn}$-Zahlen zwischen 3000 und 5000 führt.

13. Gebrauchsfertiges Mittel für den Oberflächenschutz von Zink gegen den "Weißen Rost", hergestellt nach dem Verfahren nach einem der Ansprüche 1 bis 12.

14. Verfahren für den Oberflächenschutz von Zink gegen den Weißen Rost, dadurch gekennzeichnet, daß das Mittel nach Anspruch 13 mit in Dicke zwischen 2 und 20 µm auf das Zink aufgetragen wird.

15. Verfahren für den vorübergehenden Oberflächenschutz von Zink gegen den Weißen Rost, dadurch gekennzeichnet, daß das Mittel nach Anspruch 13 in einer Dicke zwischen 2 und 20 µm auf das Zink aufgetragen wird und daß der erzeugte Film zu einem beliebigen Zeitpunkt durch Reaktion mit einer schwach alkalischen Lauge wieder entfernt wird.

16. Verfahren für den Oberflächenschutz von Zink nach Anspruch 14 oder 15, dadurch gekennzeichnet, daß das nach einem der Ansprüche 1 bis 12 hergestellte Mittel bei einer Temperatur von ca. 25°C aufgetragen wird.

**Claims**

1. A process for obtaining an acrylic and/or methacrylic polymer based preparation, intended for the superficial treatment of zinc, which consist in polymerising, in a medium of organic solvent, at least one (meth)acrylic acid and at least one (meth)acrylate, and in forming from the copolymer produced in organic solution a ready-to-use preparation by dilution in a quantity of water so that the quantity of water predominates over the quantity of solvent(s) of the polymerisation stage, **characterised in that** it consists in using at least one $C_{12}$-$C_{22}$ alkyl (meth)acrylate as the initial (meth)acrylate.

2. A process according to Claim 1, **characterised in that** the polymerisation stage results in a copolymer comprising monomer unit cells of two different types.

3. A process according to Claim 1, **characterised in that** the polymerisation stage results in a terpolymer.

4. A process according to Claim 3, **characterised in that** the terpolymer comprises lauryl (meth)acrylate unit cells.

5. A process according to any one of Claims 1 to 4, **characterised in that** the water added for the formation of the ready-to-use preparation is provided by an amine aqueous solution.

6. A process according to Claim 5, **characterised in that** the amine aqueous solution is an ammonia solution or a morpholine-based solution.

7. A process according to any one of Claims 4 to 6, **characterised in that** the polymerisation stage results in a butyl (meth)acrylate terpolymer, a lauryl (meth)acrylate terpolymer and (meth)acrylic acid terpolymer.

8. A process according to any one of Claims 1 to 7, **characterised in that** it results in a preparation comprising from 1 to 50 g of solids for 100 g.

9. A process according to any one of Claims 1 to 8, **characterised in that** the polymerisation stage results in a copolymer having an acid index of from 50 to 150 mg KOH for 1 g.

10. A process according to Claim 9, **characterised in that** the polymerisation stage result: in a copolymer having an acid index of from 90 to 120 mg KOG for 1g.

11. A process according to any one of Claims 1 to 10, **characterised in that** the polymerisation stage results in a copolymer having a mean molecular mass as Mn number of between 2000 and 20000.

12. A process according to Claim 11, **characterised in that** the polymerisation stage results in a copolymer having a mean molecular mass as Mn number of between 3000 and 5000.

13. A ready-to-use preparation for use for the superficial protection of zinc against "white rust" resulting from the process according to any one of Claims 1 to 12.

14. A process for the superficial protection of zinc against white rust, **characterised in that** it consists in applying to the zinc the preparation according to Claim 13 in a thickness of between 2 and 20 μm.

15. A process for the temporary superficial protection of zinc against white rust, **characterised in that** it consists in applying the preparation according to Claim 13 on the zinc in a thickness of between 2 and 20 μm and, at the desired moment, in eliminating said film by reaction with a weakly alkaline detergent.

16. A process for the superficial protection of zinc according to Claim 14 or 15, **characterised in that** it consists in applying onto the zinc, at a temperature in the region of 25°C, the preparation produced by the process according to any one of Claims 1 to 12.